# EUROPEAN PATENT APPLICATION

(11) **EP 4 434 855 A1**
(43) Date of publication of application: **25.09.2024**
(21) Application number: 23215772.7
(22) Date of filing: 12.12.2023
(51) Int. Cl.: B62D 25/20

(54) **VEHICLE STRUCTURE**

(30) Priority: 20.03.2023 JP 2023044560
(71) Applicant: Suzuki Motor Corporation, Hamamatsu-shi, Shizuoka 432-8611 (JP)
(72) Inventor: TSUJIMOTO, Masayuki, HAMAMATSU-SHI, 432-8611 (JP); OSHIO, Naoki, HAMAMATSU-SHI, 432-8611 (JP); ISHIKAWA, Kazuhiro, HAMAMATSU-SHI, 432-8611 (JP)
(74) Representative: Plasseraud IP

(57) **Abstract**

[Problem to be Solved]

To effectively absorb a shock energy produced by a frontal collision or the like.

[Solution]

Provided is a vehicle structure 100 including a floor side member 30. The vehicle structure 100 includes a first reinforcement 34 extending along the floor side member 30 and forming a closed section structure C3 together with the floor side member 30, and a second reinforcement 35 extending along the floor side member 30 inside the closed section structure C3. The floor side member 30 extends from a position in front of a dash panel 10 provided in a vehicle front part to a position behind the dash panel 10 in a longitudinal direction of the vehicle. Each of the first reinforcement 34 and the second reinforcement 35 extends from a position in front of the dash panel 10 to a position behind the dash panel 10 in the longitudinal direction of the vehicle inside the floor side member 30.

## Description

### [Technical Field]

The present invention relates to a vehicle structure including a floor side member.

### [Background Art]

In an outer side portion in the vehicle width direction of a lower surface of a vehicle floor panel, a floor side member extending in the longitudinal direction of the vehicle and forming a part of a vehicle body frame is disposed. The floor side member extends in the longitudinal direction of the vehicle, and has a particularly high strength against load input in the axial direction of the floor side member.

As one example of a vehicle structure having the above-mentioned floor side member, a structure disclosed in Patent Literature 1 is known. In the structure of the example, a first front side member is provided on the same axis as a side member as the floor side member at the vehicle front of the side member to protrude to the front, and also a second front side member protrudes to the vehicle front on the outside in the vehicle width direction of the first front side member. With this configuration, even in a vehicle having a vehicle front part with a short crash stroke, a collision energy produced by a frontal collision or the like can be absorbed in a short stroke by axial compression of the front side members in the vehicle front part.

### [Citation List]

### [Patent Literature]

[Patent Literature 1] JP 2005-001406 A

### [Summary of Invention]

### [Problem to be Solved by the Invention]

However, in the structure disclosed in Patent Literature 1, the second front side member is provided on the outside in the vehicle width direction of the first front side member in a narrow space in the vehicle front part. Hence, the space for disposing the second front side member needs to be secured in a narrow space, and freedom in layout of the vehicle front part may be limited.

In view of the foregoing, the present invention aims to provide a vehicle structure that can effectively absorb a shock energy produced by a frontal collision or the like while reducing limitation of freedom in layout of a vehicle front part.

### [Means for Solving the Problem]

In order to achieve the above object, one aspect of the present invention provides a vehicle structure including a floor side member provided in an outer side portion in the vehicle width direction of a lower surface of a floor panel of a vehicle and extending in the longitudinal direction of the vehicle. The vehicle structure includes a first reinforcement extending in the longitudinal direction of the vehicle along the floor side member and joined to the floor side member to form a closed section structure together with the floor side member, and a second reinforcement extending in the longitudinal direction of the vehicle along the floor side member inside the closed section structure and joined to the floor side member. The floor side member extends from a position in front of a dash panel provided in a vehicle front part to a position behind the dash panel in the longitudinal direction of the vehicle. Each of the first reinforcement and the second reinforcement extends from a position in front of the dash panel to a position behind the dash panel in the longitudinal direction of the vehicle inside the floor side member.

### [Advantageous Effect of Invention]

According to the present invention, it is possible to provide a vehicle structure that can effectively absorb a shock energy produced by a frontal collision or the like while reducing limitation of freedom in layout of a vehicle front part.

### [Brief Description of Drawings]

[Figure 1] Figure 1 is a perspective view of a cutaway model of a vehicle structure according to an embodiment of the present invention.
[Figure 2] Figure 2 is a cross-sectional view of the vehicle structure.
[Figure 3] Figure 3 is an enlarged perspective view of a main part of the vehicle structure.
[Figure 4] Figure 4 is a perspective view of the main part as viewed from another angle.
[Figure 5] Figure 5 is a cross-sectional view taken along line A-A of Figure 2.
[Figure 6] Figure 6 is a cross-sectional view taken along line B-B of Figure 3.
[Figure 7] Figure 7 is a diagram for describing a positional relationship between the front end of the floor side member and a license plate.
[Figure 8] Figure 8 is a diagram for describing a positional relationship between the front end of the floor side member and the license plate.

### [Mode for Carrying Out the Invention]

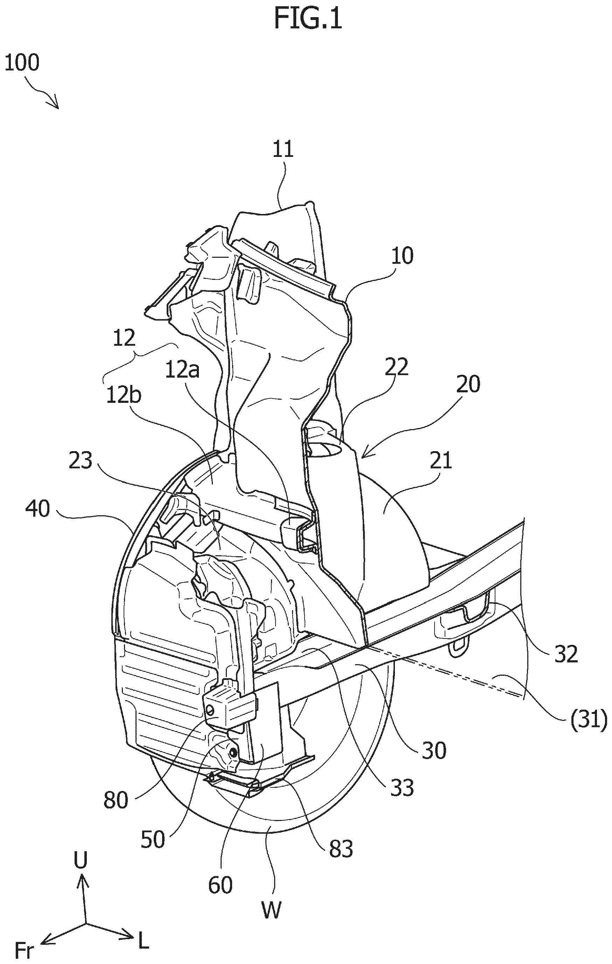

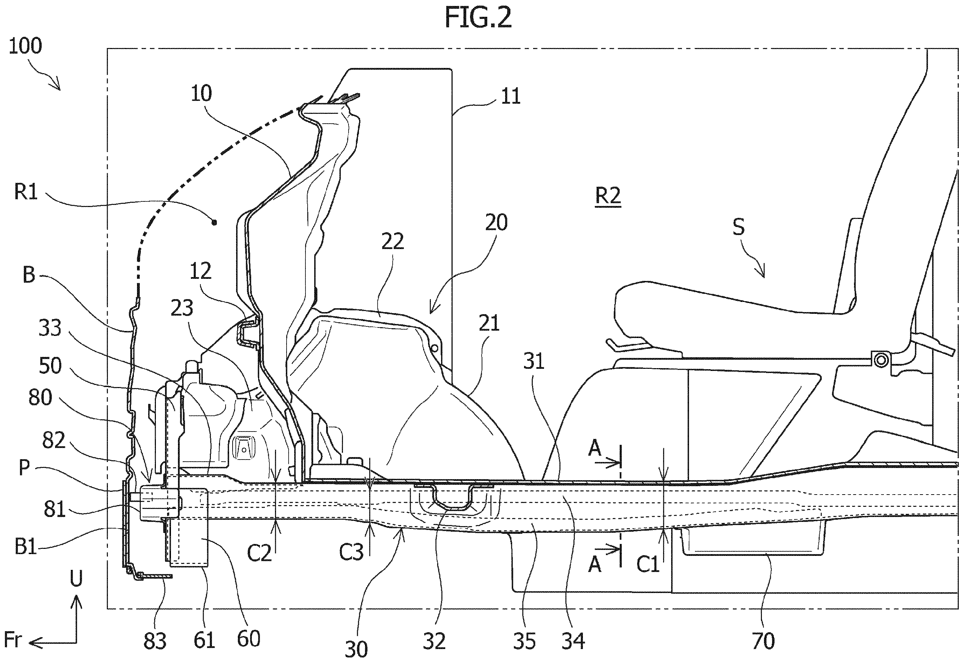

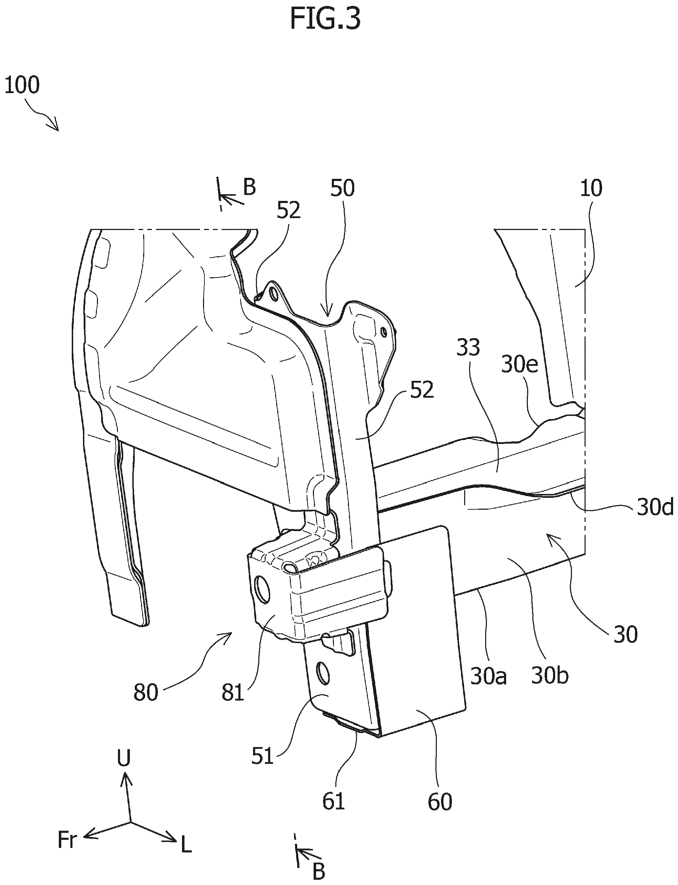

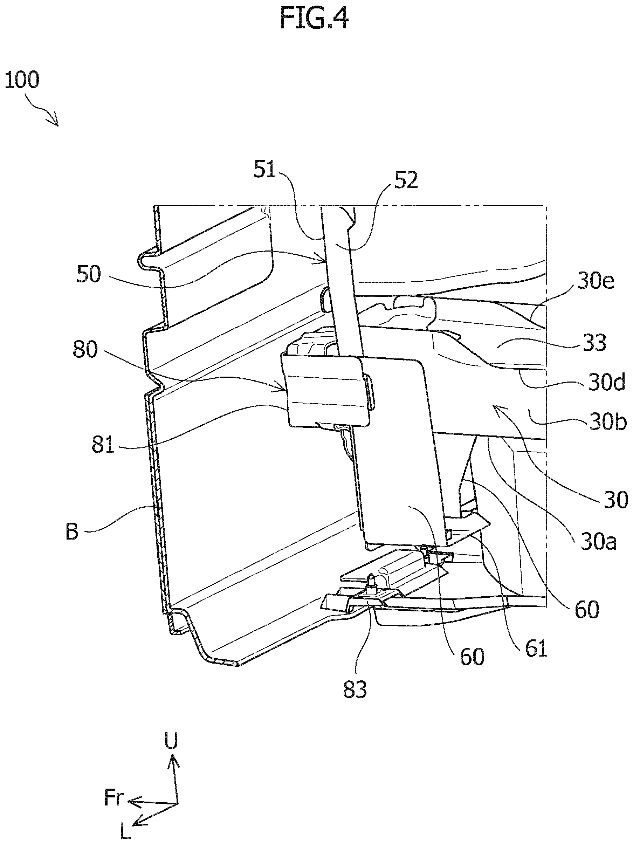

Hereinafter, an embodiment of the present invention will be described with reference to the accompanying drawings. Figures 1 to 4 are diagrams for describing a vehicle structure 100 according to an embodiment of the present invention. Figure 1 is a perspective view of a cutaway model as viewed from the vehicle front, Figure 2 is a cross-sectional view as viewed from the inside in the vehicle width direction, Figure 3 is a perspective view of a main part as viewed from the vehicle front, and Figure 4 is a perspective view of a main part as viewed in another direction and angle. Note that in the drawings, an arrow Fr direction indicates the front in the longitudinal direction of the vehicle, and an arrow U direction indicates the upper side of the vehicle in the vertical direction of the vehicle. In the description of the embodiment, "front part (front end) and rear part (rear end)" correspond to the front part and rear part in the longitudinal direction of the vehicle. In addition, arrows L and R directions indicate the left and right in the vehicle width direction. Additionally, "left and right" in the description of the present embodiment correspond to the left and right when an occupant riding the vehicle faces the vehicle front.

As illustrated in Figures 1 to 4, the vehicle structure 100 of the present embodiment is mainly applied to a vehicle front part and a vehicle bottom part. Although not particularly limited, in the present embodiment, a vehicle to which the vehicle structure 100 is applied is a small vehicle in which the dimension in the longitudinal direction of the vehicle of a vehicle front part (specifically, part from dash panel 10 to front bumper B described later) is relatively short. Note that the drawings illustrate a part including the front right wheel of the vehicle in the vehicle structure 100. A part of the vehicle structure 100 including the front left wheel has the same structure as the part including the front right wheel except that it is bilaterally symmetrical to the part including the front right wheel illustrated in the drawings, and is omitted from the drawings.

In the present embodiment, the vehicle to which the vehicle structure 100 is applied is an electric vehicle. In the vehicle, a battery and an electric motor for vehicle travel (not illustrated) are mounted, and the electric motor operates by electric power supplied from the battery. When compared to an engine powered vehicle, if the vehicle size is about the same, an electric vehicle is generally heavier than an engine powered vehicle.

Referring to Figures 1 to 4, the vehicle structure 100 of the present embodiment includes the dash panel 10, a wheelhouse 20, a floor side member 30, and a dash side frame 40.

The dash panel 10 is provided in a vehicle front part. The dash panel 10 is a panel material separating a front unit compartment R1 and a passenger compartment R2, for example, and extends in the vehicle width direction and the vertical direction of the vehicle. A driving device (electric motor in present embodiment) such as an engine or an electric motor is disposed below a seat S in the passenger compartment R2.

The front unit compartment R1 mainly includes the dash panel 10, the front bumper B (see Figures 2 and 4) extending in the vehicle width direction at the vehicle front end, and a front hood (see chain double-dashed line in Figure 1) extending from an upper end part of the dash panel 10 to an upper end part of the front bumper B.

The front bumper B has a front surface forming a part of a design surface of a front surface of the vehicle, and extends over the entire vehicle width direction. The front bumper B has, in a front part thereof, a plate attachment portion B1 on which a license plate P is attached. The plate attachment portion B1 is formed as a flat surface on a front surface of the front part of the front bumper B. Note that the front bumper B is detached in Figures 1 and 3, the front hood is detached in Figures 1, 3, and 4, and a front wheel W is detached in Figures 2 to 4.

A dash side panel 11 is provided in an outer side portion in the vehicle width direction of the dash panel 10. The dash side panel 11 is a panel material joined to an upper portion of the outer side portion in the vehicle width direction of the dash panel 10 and extending in the longitudinal direction of the vehicle.

A dash cross member 12 is joined to a middle portion in the vertical direction of the vehicle on the front surface of the dash panel 10. The dash cross member 12 includes a cross member main body portion 12a and a cross member outer side portion 12b. The cross member main body portion 12a has a hat-shaped section and extends in the vehicle width direction along the front surface of the dash panel 10. The cross member outer side portion 12b is formed integrally with the cross member main body portion 12a, is continuous with both end parts in the vehicle width direction of the cross member main body portion 12a, and extends to the vicinity of the outer side portion in the vehicle width direction of the dash panel 10.

The wheelhouse 20 is a panel material covering the front wheel W of the vehicle from above, and is joined to a lower portion of the outer side portion in the vehicle width direction of the dash panel 10. In the present embodiment, the wheelhouse 20 includes a wheelhouse main body panel 21, a strut tower 22, and a wheelhouse extension panel 23.

The wheelhouse main body panel 21 forms most of the wheelhouse 20, and is formed so as to bulge toward the inside in the vehicle width direction and the upper side of the vehicle roughly in the shape of the outer shape of the front wheel W.

The strut tower 22 is a structure including a panel material for attaching an upper portion of a strut (not illustrated) of a strut-type front suspension device (not illustrated), the strut extending in the vertical direction of the vehicle. The strut tower 22 is formed integrally with the wheelhouse main body panel 21.

In the present embodiment, the strut tower 22 is disposed behind the dash panel 10. That is, the vehicle to which the vehicle structure 100 of the present embodiment is applied is a vehicle in which the strut tower 22 is located behind the dash panel 10 and the distance between the dash panel 10 and the vehicle front end (front bumper B) is significantly short. Accordingly, the vehicle is a small vehicle in which the longitudinal dimension of the vehicle front part is significantly short and the longitudinal space of the front unit compartment R1 is narrow as compared to other small vehicles. In addition, in the vehicle, in terms of the relationship with the axle of the front wheel W, the dash panel 10 is located in front of the axle of the front wheel W in the longitudinal direction of the vehicle and is disposed in a longitudinal position between the axle of the front wheel W and the strut tower 22, for example.

The wheelhouse extension panel 23 is a panel material that extends the wheelhouse main body panel 21 frontward, is joined to a front portion of the wheelhouse main body panel 21, and extends frontward from the front portion. In the present embodiment, the wheelhouse extension panel 23 is located in front of the dash panel 10 and covers an upper portion of a portion of the front wheel W in front of the axle.

A lower portion of the outer side portion in the vehicle width direction of the dash panel 10 is joined to a portion between the strut tower 22 and the wheelhouse extension panel 23 on an upper surface of the wheelhouse 20.

The floor side member 30 is a member with high stiffness that forms a portion of the vehicle body frame in a bottom portion of the vehicle body. The floor side member 30 is provided in the outer side portion in the vehicle width direction of a lower surface of a floor panel 31 of the vehicle, and extends in the longitudinal direction of the vehicle. In other words, the floor side member 30 is disposed below the dash panel 10 and extends in the longitudinal direction of the vehicle.

The floor side member 30 is provided in each of a right side portion and a left side portion in the vehicle width direction of the lower surface of the floor panel 31. In the longitudinal direction of the vehicle, the floor side member 30 extends over approximately the entire vehicle in the longitudinal direction. In the drawings, the floor side member 30 of the right side portion is illustrated. A floor cross member 32 extending in the vehicle width direction is provided between the floor side member 30 of the right side portion and the floor side member 30 of the left side portion. The floor cross member 32 connects the right and left pair of floor side members 30 and forms a portion of the vehicle body frame.

The dash side frame 40 extends to the vehicle front from the outer side portion in the vehicle width direction of the dash panel 10, and is located on the outside in the vehicle width direction of the floor side member 30 in the vehicle width direction in plan view as viewed in the vertical direction of the vehicle. The dash side frame 40 is disposed above the outer side portion in the vehicle width direction of the wheelhouse 20. Specifically, the dash side frame 40 extends to the vehicle front from a front portion of the dash side panel 11 joined to the outer side portion in the vehicle width direction of the dash panel 10.

Here, it may be necessary to effectively absorb a shock energy generated by a collision load due to a frontal collision or the like while reducing limitation of freedom in layout of a vehicle front part. In particular, such a requirement may occur in the case of a vehicle having a vehicle front part (part from dash panel 10 to front bumper B, for example) with a relatively short dimension in the longitudinal direction of the vehicle, such as the vehicle of the present embodiment, in other words, a vehicle having the front unit compartment R1 with a narrow longitudinal space, or the like. Against this background, the vehicle structure 100 according to the present embodiment has the following structure.

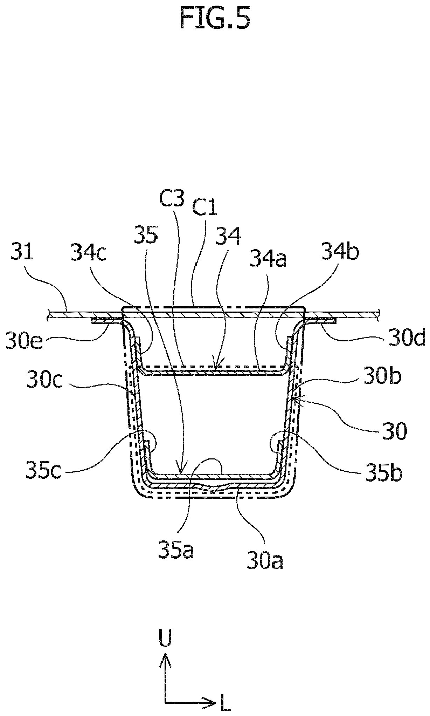

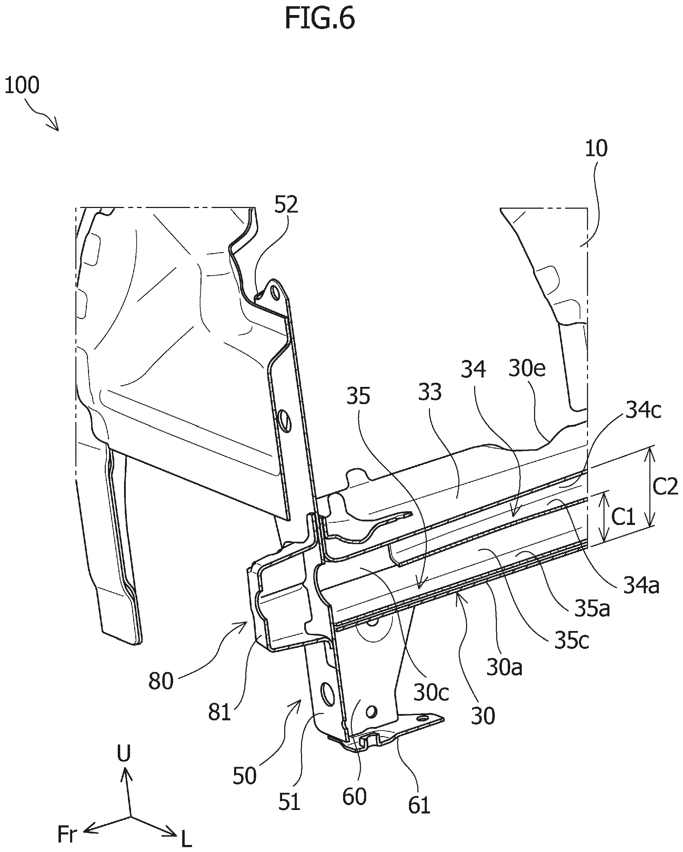

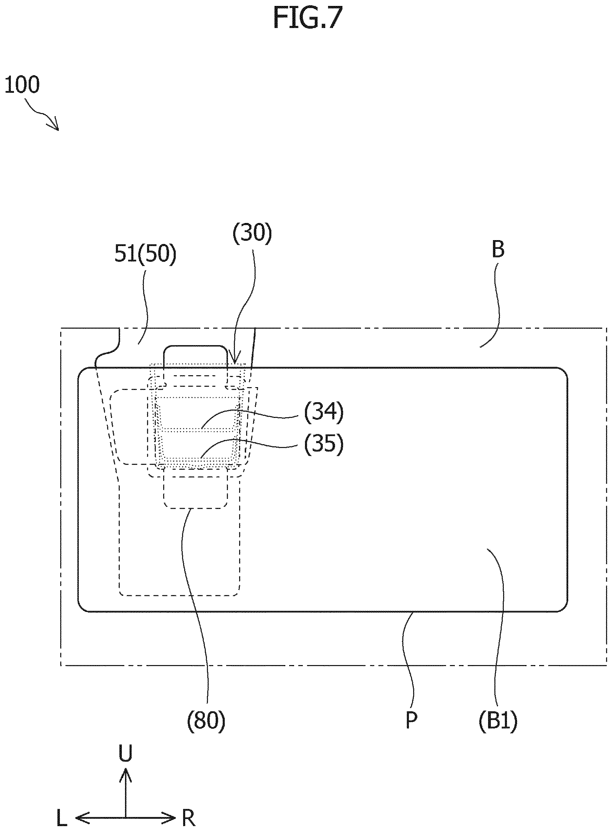

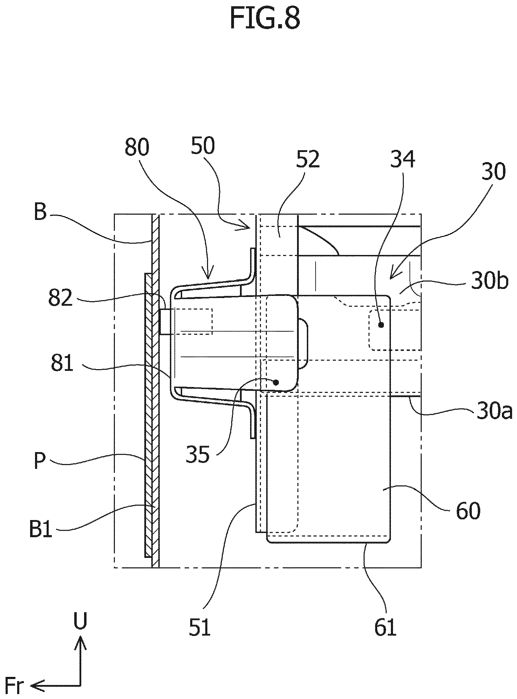

Next, a main portion of the vehicle structure 100 will be described in detail with reference to Figures 1 to 8. Figure 5 is a cross-sectional view taken along line A-A of Figure 2, and Figure 6 is a cross-sectional view taken along line B-B of Figure 3. Figures 7 and 8 are diagrams for describing a positional relationship between the front end of the floor side member 30 and the license plate P. Figure 7 illustrates the positional relationship in front view when the front end of the floor side member 30 is viewed from the front, and Figure 8 illustrates the positional relationship in side view when the front end of the floor side member 30 is viewed from the inside in the vehicle width direction.

Referring to Figures 1 to 3, the floor side member 30 extends from a position in front of the dash panel 10 provided in a vehicle front part to a position behind the dash panel 10 in the longitudinal direction of the vehicle. Accordingly, in plan view as viewed in the vertical direction of the vehicle, the floor side member 30 extends so as to intersect the dash panel 10. Then, in plan view as viewed in the vertical direction of the vehicle, a front portion of the floor side member 30 protrudes frontward from the dash panel 10, and most of the floor side member 30 except for the front portion protrudes rearward from the dash panel 10.

Referring to Figures 1 to 6, the floor side member 30 includes a bottom wall portion 30a facing the lower side of the vehicle and extending in the longitudinal direction of the vehicle, a first side wall portion 30b extending toward the upper side of the vehicle from an inner side portion in the vehicle width direction of the bottom wall portion 30a, and a second side wall portion 30c extending toward the upper side of the vehicle from an outer side portion in the vehicle width direction of the bottom wall portion 30a. That is, in the present embodiment, the floor side member 30 includes the first side wall portion 30b and the second side wall portion 30c facing each other in the vehicle width direction, has a recessed section open toward the upper side of the vehicle in cross-sectional view orthogonal to the lengthwise direction of the floor side member 30 (longitudinal direction of vehicle, extending direction), and extends in the longitudinal direction of the vehicle.

Specifically, in a portion of the floor side member 30 in front of the dash panel 10, a front end side portion has a recessed section open toward the upper side, a dash panel side portion has a roughly hat-shaped section open toward the upper side, and a middle portion has a section gradually changing from the recessed section toward the hat-shaped section. Then, a portion of the floor side member 30 behind the dash panel 10 has a hat-shaped section open toward the upper side. Accordingly, the floor side member 30 has a recessed section at least open toward the upper side over the entire lengthwise direction. Then, the portion of the floor side member 30 having a hat-shaped section includes an inner side flange portion 30d protruding inward in the vehicle width direction from the upper end of the first side wall portion 30b, and an outer side flange portion 30e protruding outward in the vehicle width direction from the upper end of the second side wall portion 30c.

Referring to Figure 5, in a portion of the floor side member 30 behind the dash panel 10, each of the inner side flange portion 30d and the outer side flange portion 30e is joined to the lower surface of the floor panel 31 by spotwelding or the like, so that a substantially rectangular (in other words, square tube-shape) closed section structure C1 is formed in cross-sectional view orthogonal to the lengthwise direction (longitudinal direction of vehicle, extending direction) of the floor side member 30.

Referring to Figures 3, 4, and 6, in the portion of the floor side member 30 in front of the dash panel 10, the floor panel 31 is not provided and an upper opening of the floor side member 30 is closed by a front upper cover 33. In the portion of the floor side member 30 in front of the dash panel 10, the front upper cover 33 is joined to an upper end portion of the floor side member 30 by spotwelding or the like, so that a substantially rectangular (in other words, square tube-shaped) closed section structure C2 (see Figure 6) is formed in cross-sectional view orthogonal to the lengthwise direction of the floor side member 30.

The vehicle structure 100 of the present embodiment includes a first reinforcement 34, a second reinforcement 35, a vertical member 50, a flange extension member 60, a holding member 70, and a shock absorbing member 80.

The first reinforcement 34 and the second reinforcement 35 are disposed inside the floor side member 30 and are members reinforcing the floor side member 30.

The first reinforcement 34 extends in the longitudinal direction of the vehicle along the floor side member 30 and is joined to the floor side member 30 to form a closed section structure C3 together with the floor side member 30.

The second reinforcement 35 extends in the longitudinal direction of the vehicle along the floor side member 30 inside the closed section structure C3 formed by the first reinforcement 34 and the floor side member 30, and is joined to the floor side member 30.

Each reinforcement (34, 35) is joined to the floor side member 30 by spotwelding or the like inside the closed section structure C1 formed by the floor panel 31 and the floor side member 30 and inside the closed section structure C2 formed by the front upper cover 33 and the floor side member 30.

Each of the first reinforcement 34 and the second reinforcement 35 extends from a position in front of the dash panel 10 to a position behind the dash panel 10 in the longitudinal direction of the vehicle inside the floor side member 30. That is, each reinforcement (34, 35), too, extends so as to intersect the dash panel 10 in plan view as viewed in the vertical direction of the vehicle.

Specifically, each of the first reinforcement 34 and the second reinforcement 35 extends continuously inside the floor side member 30. With this configuration, the floor side member 30 is reinforced from within by the reinforcements (34, 35), and as a result, generation of a split point where breakage in the vehicle width direction easily occurs in the floor side member 30 is effectively reduced or prevented. Note that in the present embodiment, although the second reinforcement 35 extends to the front end of the floor side member 30, the front end of the first reinforcement 34 is slightly offset to the rear from the front end of the floor side member 30.

The first reinforcement 34 is located above the second reinforcement 35 in the floor side member 30. The first reinforcement 34 and the second reinforcement 35 are separated from each other in the vertical direction of the vehicle. Here, the floor side member 30 extends, from its front end, linearly to the rear to a position behind and in the vicinity of the dash panel, and bulges slightly downward at the position behind and in the vicinity of the dash panel. Then, the bottom wall portion 30a of a rear portion of the floor side member 30 is formed so as to curve gently downward. The vertical dimension of each side wall portion (30b, 30c) of the rear portion of the floor side member 30 is greater than the vertical dimension of each side wall portion (30b, 30c) of a front portion of the floor side member 30. Then, while the first reinforcement 34 extends linearly, the second reinforcement 35 curves gently along the bottom wall portion 30a of the floor side member 30 in a rear portion of the second reinforcement 35 but extends generally straight as a whole without bending greatly. Accordingly, each reinforcement (34, 35) has good formability, and each reinforcement (34, 35) improves the strength of the floor side member 30 in the lengthwise direction (axial direction) effectively.

Referring to Figure 5, each reinforcement (34, 35) extends in the longitudinal direction of the vehicle with a recessed section open toward the upper side of the vehicle. Specifically, the first reinforcement 34 includes a first bottom wall portion 34a facing the lower side of the vehicle and extending in the longitudinal direction of the vehicle, a first left wall portion 34b extending toward the upper side of the vehicle from an inner side portion in the vehicle width direction of the first bottom wall portion 34a, and a first right wall portion 34c extending toward the upper side of the vehicle from an outer side portion in the vehicle width direction of the first bottom wall portion 34a. The second reinforcement 35 includes a second bottom wall portion 35a facing the lower side of the vehicle and extending in the longitudinal direction of the vehicle, a second left wall portion 35b extending toward the upper side of the vehicle from an inner side portion in the vehicle width direction of the second bottom wall portion 35a, and a second right wall portion 35c extending toward the upper side of the vehicle from an outer side portion in the vehicle width direction of the second bottom wall portion 35a.

In the present embodiment, the first reinforcement 34 connects the first side wall portion 30b and the second side wall portion 30c by closing an upper opening of the floor side member 30. Then, the second reinforcement 35 connects the first side wall portion 30b and the second side wall portion 30c inside the closed section structure C3 formed by the first reinforcement 34 and the floor side member 30. That is, each reinforcement 34, 35 connects both side wall portions (30b, 30c) in the vehicle width direction of the floor side member 30.

Specifically, in the first reinforcement 34, the first left wall portion 34b is joined to an upper portion of an inner surface of the first side wall portion 30b, and the first right wall portion 34c is joined to an upper portion of an inner surface of the second side wall portion 30c. As a result, the first reinforcement 34 effectively reduces opening and closing of the upper opening of the floor side member 30 in the vehicle width direction. Then, in the second reinforcement 35, the second bottom wall portion 35a is joined to the bottom wall portion 30a, the second left wall portion 35b is joined to a lower portion of the inner surface of the first side wall portion 30b, and the second right wall portion 35c is joined to a lower portion of the inner surface of the second side wall portion 30c. As a result, the second reinforcement 35 has a function of a patch that increases the thickness of the bottom wall portion 30a of the floor side member 30, and effectively reduces deformation in the vertical direction of the vehicle and in the vehicle width direction of the section of the closed section structure C3.

Referring to Figures 3 and 4, the vertical member 50 is a panel material that covers the front end of the floor side member 30 from the front and extends in the vertical direction of the vehicle. The vertical member 50 includes a front wall 51 facing the vehicle front, and a flange wall 52 extending toward the vehicle rear from an outer side portion in the vehicle width direction from the front wall 51 and joined to the floor side member 30 (first side wall portion 30b or second side wall portion 30c).

The vertical member 50 protrudes upward from the upper end of the floor side member 30 and protrudes downward from the lower end of the floor side member 30. The front wall 51 of the vertical member 50 abuts on the front end of the floor side member 30, the left flange wall 52 of the vertical member 50 abuts on an outer surface of the first side wall portion 30b of the floor side member 30, and the right flange wall 52 of the vertical member 50 abuts on an outer surface of the second side wall portion 30c of the floor side member 30. Then, the front end of the second reinforcement 35 extends to the front end of the floor side member 30 as described earlier, and the front end position of the second reinforcement 35 overlaps the position of the flange wall 52 of the vertical member 50 in side view as viewed in the vehicle width direction. On the other hand, in the present embodiment, the front end of the first reinforcement 34 is offset to the rear from the front end of the floor side member 30 as described earlier, and the front end position of the first reinforcement 34 does not overlap the position of the flange wall 52 of the vertical member 50 in side view as viewed in the vehicle width direction.

The flange extension member 60 extends from a position overlapping the position of the flange wall 52 of the vertical member 50 to a position overlapping the positions of the first reinforcement 34 and the second reinforcement 35 in the longitudinal direction of the vehicle, and is joined to the vertical member 50 and the floor side member 30. That is, the flange extension member 60 is provided so as to correspond to each of the left flange wall 52 and the right flange wall 52 of the vertical member 50.

In side view as viewed in the vehicle width direction, the left flange extension member 60 is joined to the left flange wall 52 of the vertical member 50 and the first side wall portion 30b of the floor side member 30 while being disposed so as to overlap the left flange wall 52, the first side wall portion 30b, the first reinforcement 34, and the second reinforcement 35.

In side view as viewed in the vehicle width direction, the right flange extension member 60 is joined to the right flange wall 52 of the vertical member 50 and the second side wall portion 30c of the floor side member 30 while being disposed so as to overlap the right flange wall 52, the second side wall portion 30c, the first reinforcement 34, and the second reinforcement 35.

In the present embodiment, a front portion of each flange extension member 60 overlaps the flange wall 52 and a front portion of the second reinforcement 35 in side view as viewed in the vehicle width direction, and a rear portion of each flange extension member 60 overlaps the flange wall 52, the second reinforcement 35, and a front portion of the first reinforcement 34. That is, each flange extension member 60 extends rearward so as to extend the flange wall 52 by an amount of the rearward offset of the front end of the first reinforcement 34. As described above, the front end of each reinforcement (34, 35) extends to a front end-nearby position including the front end of the floor side member 30, and forms a portion with high stiffness together with the vertical member 50 and the flange extension member 60 that surround the front portion of the floor side member 30.

In the present embodiment, one (left flange extension member 60, for example) of the right and left flange extension members 60 includes, as one body, a lower wall portion 61 that extends from the lower end of the one flange extension member 60 to the lower end of the other flange extension member 60 (right flange extension member 60 in this example) and is joined to the lower end and the lower end of the vertical member 50. This configuration reduces rearward deformation of the vertical member 50.

Referring again to Figure 2, the holding member 70 is a member that is joined to the floor side member 30 below the seat S disposed at the vehicle rear with respect to the dash panel 10 to hold a predetermined element. In order to hold the predetermined element, the holding member 70 is formed to have a high stiffness by a panel material, for example, and is joined to a lower portion of the floor side member 30. Accordingly, the portion of the floor side member 30 to which the holding member 70 is joined has a higher stiffness than other portions. Although not particularly limited, the predetermined element is a battery that supplies electric power to an electric motor, for example. In this case, the battery is disposed below the floor panel 31, for example, and the holding member 70 is configured to hold a predetermined portion such as an end portion of the battery.

In the present embodiment, in terms of the relationship with the holding member 70, the first reinforcement 34 and the second reinforcement 35 extend at least to the longitudinal position of the holding member 70 at the vehicle rear. Accordingly, in the present embodiment, each reinforcement (34, 35) extends to a portion below the seat S having a particularly high stiffness from the front end-nearby position of the floor side member 30.

The shock absorbing member 80 is a member that is joined to the front wall 51 of the vertical member 50 and protrudes frontward. Referring to Figure 7, in plan view as viewed from the vehicle front, the shock absorbing member 80 is disposed so as to cover the front end of the floor side member 30. The shock absorbing member 80 is formed by a panel material. The front bumper B extends in the vehicle width direction in front of the shock absorbing member 80.

Referring to Figures 7 and 8, the shock absorbing member 80 includes a bumper support portion 81 that faces a rear surface of the plate attachment portion B1 of the front bumper B to support the front bumper B from the rear. The license plate P and the front bumper B are fixed and supported to the bumper support portion 81 via a fixture 82 such as a bolt. A lower portion of the front bumper B is supported to the vehicle body side via a bumper lower support portion 83.

According to the vehicle structure 100 of the present embodiment, the floor side member 30 is reinforced by the first reinforcement 34 that extends in the longitudinal direction of the vehicle along the floor side member 30 and is joined to the floor side member 30 to form the close section structure C3 together with the floor side member 30, and the second reinforcement 35 that extends in the longitudinal direction of the vehicle along the floor side member 30 inside the closed section structure C3 and is joined to the floor side member 30. Accordingly, (1) the strength of the floor side member 30 that forms a portion of the vehicle body frame and has a high strength against load (collision load due to frontal collision or the like) input in the longitudinal direction of the vehicle is improved even further by the first reinforcement 34 and the second reinforcement 35 provided inside the floor side member 30. (2) Additionally, for example, since the reinforcements (34, 35) are disposed inside the floor side member 30 while maintaining the conventional outer shape of the frame of the floor side member 30, space in the vehicle front part (front unit compartment R1) is not newly occupied by the reinforcements (34, 35) even in the case of a vehicle having the vehicle front part with a short dimension in the longitudinal direction of the vehicle. As a result, layout in the vehicle front part is not limited by the reinforcements (34, 35), and freedom of the vehicle front part is not reduced. (3) Then, when a collision load due to a frontal collision or the like is input to the front portion of the floor side member 30, a portion of the floor side member 30 in front of the dash panel 10, for example, is compressed and deformed in the axial direction (longitudinal direction) of the floor side member 30 together with the reinforcements (34, 35), so that a collision energy produced by a frontal collision or the like can be effectively absorbed in a short deformation stroke.

Furthermore, according to the vehicle structure 100, the floor side member 30 extends from a position in front of the dash panel 10 to a position behind the dash panel 10 in the longitudinal direction of the vehicle, and each of the first reinforcement 34 and the second reinforcement 35 extends from a position in front of the dash panel 10 to a position behind the dash panel 10 in the longitudinal direction of the vehicle inside the floor side member 30. Accordingly, (4) even in the case of a vehicle having a vehicle front part (front unit compartment R1) with a short dimension in the longitudinal direction of the vehicle, by setting the strength of each reinforcement (34, 35) appropriately, for example, it is possible to appropriately control the deformation mode of the vehicle front part at the time of a collision such as a frontal collision. As a result, at the time of a collision such as a frontal collision, the front portion of each of the floor side member 30 and the reinforcements (34, 35) is compressed and deformed in a short deformation stroke, whereby large deformation of the dash panel 10 affecting the passenger compartment R2 can be effectively reduced.

As described above, the vehicle structure 100 of the present embodiment is a structure that can effectively absorb a shock energy produced by a frontal collision or the like while reducing limitation of freedom in layout of a vehicle front part.

In the present embodiment, the vertical member 50 that covers the front end of the floor side member from the front and extends in the vertical direction of the vehicle includes the front wall 51 facing the vehicle front, and the flange wall 52 extending toward the vehicle rear from the outer side portion in the vehicle width direction of the front wall 51 and joined to the floor side member 30. The flange extension member 60 extends from a position overlapping the flange wall 52 to a position overlapping positions of the first reinforcement 34 and the second reinforcement 35 in the longitudinal direction of the vehicle, and is joined to the vertical member 50 and the floor side member 30. With this configuration, when a collision load toward the vehicle rear due to a frontal collision or the like is input to the vertical member 50 via the shock absorbing member 80, the collision load is reliably transmitted not only to the floor side member 30 but also to the first reinforcement 34 and the second reinforcement 35 through the vertical member 50 and the flange extension member 60. As a result, the shock energy produced by the collision load is received by the rear portion of the floor side member 30, or the shock energy produced by the collision load can be more effectively absorbed by compression and deformation of the floor side member 30 and the reinforcements (34, 35) in a short stroke.

In the present embodiment, the holding member 70 is joined to the floor side member 30 below the seat S disposed at the vehicle rear with respect to the dash panel 10 and holds a predetermined element, and the first reinforcement 34 and the second reinforcement 35 extend at least to the longitudinal position of the holding member 70 at the vehicle rear. With this configuration, each reinforcement (34, 35) extends to a portion below the seat S of which stiffness is increased by the holding member 70 in the floor side member 30 at the vehicle rear, so that deformation of the passenger compartment R2 is more effectively reduced. As a result, an occupant in the passenger compartment R2 can be reliably protected at the time of a frontal collision or an offset crash.

In the present embodiment, the shock absorbing member 80 is joined to the front wall 51 of the vertical member 50 and protrudes frontward, and is disposed so as to cover the front end of the floor side member 30 in plan view as viewed from the vehicle front. The front bumper B extends in the vehicle width direction in front of the shock absorbing member 80, and the shock absorbing member 80 faces the rear surface of the plate attachment portion B 1 of the front bumper B and includes the bumper support portion 81 that supports the front bumper B from the rear. With this configuration, at the time of a frontal collision, an offset crash, or the like, a collision load is input by the license plate P attached to the plate attachment portion B1 and having a relatively wide area, whereby the collision load can be efficiently transmitted to the floor side member 30 behind the license plate P and the shock energy produced by the collision load can be absorbed effectively.

In the present embodiment, the first reinforcement 34 connects the first side wall portion 30b and the second side wall portion 30c by closing the upper opening of the floor side member 30, and the second reinforcement 35 connects the first side wall portion 30b and the second side wall portion 30c inside the closed section structure C3. With this configuration, the strength of the floor side member 30 against a collision load from the vehicle width direction is improved. As a result, at the time of a side collision, deformation of the floor side member 30 by being bent inward in the vehicle width direction is reduced effectively.

While an embodiment of the present invention has been described above, the present invention is not limited to the above embodiment, and deformation and modification can be made on the basis of the technical idea of the present invention.

For example, while the front end of the first reinforcement 34 is slightly offset to the rear from the front end of the floor side member 30, the invention is not limited to this, and as in the case of the second reinforcement 35, the front end of the first reinforcement 34 may extend to the front end of the floor side member 30. In addition, the second bottom wall portion 35a of the second reinforcement 35 is not necessarily joined to the bottom wall portion 30a of the floor side member 30. Furthermore, the second bottom wall portion 35a may be separated from the bottom wall portion 30a.

A reinforcement different from the first reinforcement 34 or the second reinforcement 35 may be provided in parallel to these reinforcements (34, 35) inside the floor side member 30. The direction in which the sectional shape of each reinforcement (34, 35) and the recessed section of the floor side member 30 opens is not limited to the upper side, and may be the lower side or one of the vehicle width directions. In addition, the sectional shape of each reinforcement (34, 35) and the sectional shape of the floor side member 30 is not limited to a recessed section, and may be a sectional shape other than a recessed section.

### [Reference Signs List]

- 10: Dash panel
- 11: Dash side panel
- 12: Dash cross member
- 12a: Cross member main body portion
- 12b: Cross member outer side portion
- 20: Wheelhouse
- 21: Wheelhouse main body panel
- 22: Strut tower
- 23: Wheelhouse extension panel
- 30: Floor side member
- 30a: Bottom wall portion
- 30b: First side wall portion
- 30c: Second side wall portion
- 30d: Inner side flange portion
- 30e: Outer side flange portion
- 31: Floor panel
- 32: Floor cross member
- 33: Front upper cover
- 34: First reinforcement
- 34a: First bottom wall portion
- 34b: First left wall portion
- 34c: First right wall portion
- 35: Second reinforcement
- 35a: Second bottom wall portion
- 35b: Second left wall portion
- 35c: Second right wall portion
- 40: Dash side frame
- 50: Vertical member
- 51: Front wall
- 52: Flange wall
- 60: Flange extension member
- 61: Lower wall portion
- 70: Holding member
- 80: Shock absorbing member
- 81: Bumper support portion
- 82: Fixture
- 83: Bumper lower support portion
- 100: Vehicle structure
- B: Front bumper
- B1: Plate attachment portion
- C1: Closed section structure
- C2: Closed section structure
- C3: Closed section structure
- P: License plate
- R1: Front unit compartment
- R2: Passenger compartment
- S: Seat
- W: Front wheel

## Claims

1. A vehicle structure comprising a floor side member provided in an outer side portion in a vehicle width direction of a lower surface of a floor panel of a vehicle and extending in a longitudinal direction of the vehicle, the vehicle structure further comprising:
a first reinforcement extending in the longitudinal direction of the vehicle along the floor side member and joined to the floor side member to form a closed section structure together with the floor side member; and
a second reinforcement extending in the longitudinal direction of the vehicle along the floor side member inside the closed section structure and joined to the floor side member, **characterized in that**
the floor side member extends from a position in front of a dash panel provided in a vehicle front part to a position behind the dash panel in the longitudinal direction of the vehicle, and
each of the first reinforcement and the second reinforcement extends from a position in front of the dash panel to a position behind the dash panel in the longitudinal direction of the vehicle inside the floor side member.

2. The vehicle structure according to claim 1, further comprising:
a vertical member that covers a front end of the floor side member from the front and extending in a vertical direction of the vehicle, the vertical member including a front wall facing the vehicle front and a flange wall extending toward the vehicle rear from an outer side portion in the vehicle width direction of the front wall and joined to the floor side member; and
a flange extension member extending from a position overlapping a position of the flange wall to a position overlapping positions of the first reinforcement and the second reinforcement in the longitudinal direction of the vehicle and joined to the vertical member and the floor side member.

3. The vehicle structure according to claim 2, further comprising a holding member joined to the floor side member below a seat disposed at the vehicle rear with respect to the dash panel and holding a predetermined element,
wherein the first reinforcement and the second reinforcement extend at least to a longitudinal position of the holding member at the vehicle rear.

4. The vehicle structure according to claim 3, further comprising:
a shock absorbing member joined to the front wall of the vertical member and protruding frontward, the shock absorbing member disposed so as to cover the front end of the floor side member in plan view as viewed from the vehicle front; and
a front bumper extending in the vehicle width direction in front of the shock absorbing member, the front bumper including a plate attachment portion to which a license plate is attached;
wherein the shock absorbing member includes a bumper support portion facing a rear surface of the plate attachment part of the front bumper and supporting the front bumper from the rear.

5. The vehicle structure according to any one of claims 1 to 4, wherein:
the floor side member includes a first side wall portion and a second side wall portion facing each other in the vehicle width direction and extends in the longitudinal direction of the vehicle with a recessed section open toward the upper side of the vehicle,
the first reinforcement connects the first side wall portion and the second side wall portion by closing an upper opening of the floor side member, and
the second reinforcement connects the first side wall portion and the second side wall portion inside the closed section structure.
